# FASCICULE DE BREVET EUROPEEN

(11) **EP 4 363 766 B1**
(45) Date de publication et mention de la délivrance du brevet: **23.04.2025**
(21) Numéro de dépôt: 22736263.9
(22) Date de dépôt: 28.06.2022
(51) Int. Cl.: F21S 41/24, F21S 41/26, F21S 43/14, F21S 43/15, F21S 43/239, F21S 43/243, F21S 43/247, F21S 41/143, F21S 41/148, B60Q 1/00, F21V 8/00, F21S 41/32, F21S 41/365, F21S 43/20, F21W 102/13, F21W 102/155, F21W 103/55

(54) **MODULE D'ÉCLAIRAGE AUTOMOBILE VERTICAL AVEC ASPECTS ÉCLAIRÉS JOUR ET NUIT IDENTIQUES**
VERTIKALES KRAFTFAHRZEUGBELEUCHTUNGSMODUL MIT IDENTISCHEN TAG- UND NACHTBELEUCHTUNGSASPEKTEN
VERTICAL AUTOMOTIVE LIGHTING MODULE WITH IDENTICAL DAY AND NIGHT LIGHTING ASPECTS

(30) Priorité: 30.06.2021 FR 2107118
(43) Date de publication de la demande: 08.05.2024
(73) Titulaire: VALEO VISION, 93012 Bobigny Cedex (FR)
(72) Inventeur: ALBOU, Pierre, 93012 BOBIGNY CEDEX (FR); DE LAMBERTERIE, Antoine, 93012 BOBIGNY CEDEX (FR); RENAUD, Pierre, 93012 BOBIGNY CEDEX (FR); SANCHEZ, Vanesa, 93012 BOBIGNY CEDEX (FR)
(74) Mandataire: Valeo Visibility
(86) Numéro de dépôt international: PCT/EP2022/067809
(87) Numéro de publication internationale: WO 2023/275100

(56) Documents cités:
- EP-A1- 1 850 064
- EP-A1- 2 045 515
- EP-A1- 2 679 884
- EP-A1- 2 778 512
- DE-A1- 19 803 987
- DE-A1- 19 838 221
- FR-A1- 3 103 253
- GB-A- 2 274 158
- US-A1- 2011 085 343
- US-A1- 2016 040 850
- US-A1- 2016 109 084
- US-A1- 2017 089 540

## Description

### Domaine technique

L'invention a trait au domaine de l'éclairage, en particulier de l'éclairage automobile.

### Technique antérieure

Les projecteurs des véhicules automobiles assurent actuellement, entre autres, trois fonctions d'éclairage réglementaire, à savoir une fonction d'éclairage à coupure horizontale supérieure, couramment désignée « code » (ou « low-beam » en anglais), une fonction d'éclairage sans coupure, couramment désignée « route » ou « plein phare » (ou « high-beam » en anglais), ainsi qu'une fonction d'éclairage de jour couramment désigné « DRL », acronyme de l'expression anglaise « Daytime Running Light ».

Le document de brevet publié EP 2 045 515 A1 divulgue un module d'éclairage, notamment à coupure horizontale supérieure, c'est-à-dire du type « code », comprenant un guide optique en nappe verticale avec une extrémité, du côté de la face de sortie, de section divergente et formant avec la face de sortie courbée une lentille de projection. Le guide optique en nappe comprend une face de réflexion de profil courbe, du type parabolique, configuré pour réfléchir les rayons provenant de la face d'entrée vers la face de sortie suivant un axe optique du module d'éclairage. A cet effet, la ou les sources lumineuses en vis-à-vis de la face d'entrée sont situées au foyer du profil parabolique. Ce document prévoit également de disposer plusieurs guides optiques en nappe côte-à-côte, ces nappes se rejoignant vers l'arrière au niveau de la face de réflexion et de la face d'entrée.

Le document de brevet publié EP 2 679 884 A1 divulgue un module d'éclairage, notamment à coupure horizontale supérieure, c'est-à-dire du type « code », comprenant un guide optique plat horizontal avec une série de lentilles de projection sur la face de sortie et une face de réflexion avec un profil en escalier pour distribuer la lumière transmise le long du guide vers les différentes lentilles de projection.

Le document de brevet publié US 2011/085343 A1 divulgue un dispositif d'éclairage comprenant une pluralité d'éléments optiques juxtaposés.

Les modules d'éclairage décrits ci-avant sont intéressants en ce qu'ils permettent de réaliser des fonctions d'éclairage automobile réglementaires tout en présentant une face éclairée, à savoir la face de sortie du guide optique, mince et allongée, procurant un avantage d'intégration dans une carrosserie de véhicule. Ils présentent toutefois l'inconvénient de n'assurer qu'une seule fonction d'éclairage. Pour assurer les fonctions d'éclairage réglementaire, c'est-à-dire avec et sans coupure horizontale, il est nécessaire de prévoir deux modules d'éclairage, éventuellement disposés côte-à-côte. La face de sortie cumulée présente alors des aspects éclairés distincts suivant la fonction d'éclairage activée. Or il est souhaitable que la face de sortie ou éclairée présente un aspect identique ou du moins similaire dans les différentes fonctions d'éclairage.

### Exposé de l'invention

L'invention a pour objet de pallier au moins un des inconvénients de l'état de la technique susmentionné. Plus particulièrement, l'invention a pour objectif de proposer un module d'éclairage automobile assurant au moins deux fonctions d'éclairage, préférentiellement une fonction d'éclairage à coupure et une fonction d'éclairage sans coupure, tout en présentant un aspect éclairé essentiellement constant. Plus particulièrement encore, l'invention a pour objectif de proposer un module d'éclairage automobile présentant une forme allongée verticalement.

L'invention a pour objet un module d'éclairage pour véhicule automobile, comprenant une pluralité de sous-modules d'éclairage comprenant, chacun, au moins une source lumineuse ; un guide optique plat avec une face d'entrée en vis-à-vis de l'au moins une source lumineuse, une face de sortie et, à l'arrière de la face de sortie, une face de réflexion apte à réfléchir de la lumière de la face d'entrée vers la face de sortie ; remarquable en ce que la pluralité de sous-modules d'éclairage comprend des premiers sous-modules d'éclairage configurés pour produire, chacun, un sous-faisceau d'éclairage avec une coupure horizontale supérieure et des deuxièmes sous-modules d'éclairage configurés pour produire, chacun, un sous-faisceau d'éclairage sans coupure horizontale supérieure ; et les premiers et deuxième sous-modules d'éclairage sont juxtaposés de manière à former, le long de la juxtaposition, plusieurs alternances entre les premiers et deuxième sous-modules d'éclairage.

Par juxtaposition, on entend que les sous-modules d'éclairage sont disposés côte-à-côte avec ou sans jeu.

Par guide optique plat on entend un guide optique avec deux faces principales de guidage opposées et généralement parallèles, ces deux faces étant généralement étendues sans pour autant être nécessairement parfaitement planes. Ces deux faces sont séparées par un pourtour définissant une épaisseur du guide optique plat, l'épaisseur pouvant par ailleurs être variable. La face d'entrée, la face de réflexion et éventuellement la face de sortie sont situées sur ce pourtour.

Selon un mode avantageux de l'invention, les guides optiques plats de la pluralité de sous-modules d'éclairage s'étendent suivant une direction principale horizontale ou verticale, lorsque le module d'éclairage est en position de montage et observé de face.

Selon un mode avantageux de l'invention, les faces de sortie des guides optiques plats de la pluralité de sous-modules d'éclairage sont adjacentes et forment une face de sortie globale du module d'éclairage présentant une hauteur H et une largeur l, ladite hauteur H étant supérieure ou égale à 5 fois ladite largeur 1. Les faces de sortie adjacentes peuvent être en contact direct ou présenter un jeu, de proche en proche.

Selon un mode avantageux de l'invention, les faces de sortie des guides optiques plats de la pluralité de sous-modules d'éclairage présentent, chacune, une largeur inférieure ou égale à 5mm.

Selon un mode avantageux de l'invention, les plusieurs alternances entre les premiers et deuxièmes sous-modules d'éclairage sont à un nombre correspondant au nombre des premiers sous-modules d'éclairage ou au nombre des deuxièmes sous-modules d'éclairage.

Selon un mode avantageux de l'invention, les guides optiques plats de la pluralité de sous-modules d'éclairage forment des nappes s'étendant suivant une direction principale verticale, lorsque le module d'éclairage est en position de montage et observé de face, et sont décalés longitudinalement les uns par rapport aux autres de manière à ce que les faces de sortie desdits guides optiques plats présentent un profil horizontal incliné et/ou courbe.

Avantageusement, pour au moins un, préférentiellement chacun, des premiers et/ou deuxièmes sous-modules d'éclairage, le guide optique plat formant une nappe s'étendant verticalement est un premier guide optique plat et l'au moins source lumineuse est au moins une première source lumineuse, ledit sous-module d'éclairage comprenant un deuxième guide optique plat formant une nappe s'étendant verticalement, opposé verticalement au premier guide optique plat, et au moins une deuxième source lumineuse éclairant une face d'entrée dudit deuxième guide optique plat. Le deuxième guide optique plat comprend une face de sortie alignée avec la face de sortie du premier guide optique plat et une face de réflexion apte à réfléchir de la lumière de ladite face d'entrée vers ladite face de sortie dudit deuxième guide optique plat. Les au moins une première et deuxième sources lumineuses sont avantageusement disposées sur des faces opposées d'une platine commune.

Selon un mode avantageux de l'invention, la face de sortie de chacun des guides optiques plats de la pluralité de sous-modules d'éclairage présente un profil vertical en escalier et incliné, de haut en bas, vers l'arrière.

Selon un mode avantageux de l'invention, pour chacun des guides optiques plats de la pluralité de sous-modules d'éclairage, la face d'entrée est transversale à la face de sortie et la face réflexion présente un profil vertical courbe apte à réfléchir la lumière de la face d'entrée vers la face de sortie suivant un axe optique du sous-module d'éclairage correspondant.

Selon un mode avantageux de l'invention, chacun des guides optiques plats de la pluralité de sous-modules d'éclairage comprend une portion de raccordement avec deux faces latérales divergentes, raccordant la nappe à la face de sortie, ladite face de sortie présentant un profil transversal courbe formant une lentille.

Selon un mode avantageux de l'invention, le module d'éclairage comprend, en outre, des sources lumineuses additionnelles disposées à l'arrière des deux faces divergentes des guides optiques plats de la pluralité de sous-modules d'éclairage, configurées pour assurer une fonction d'éclairage de jour.

Selon un mode avantageux de l'invention, les guides optiques plats de la pluralité de sous-modules d'éclairage s'étendent suivant une direction principale horizontale, lorsque le module d'éclairage est en position de montage et observé de face, et sont décalés longitudinalement les uns par rapport aux autres de manière à ce que les faces de sortie desdits guides optiques plats présentent un profil vertical incliné ou courbe.

Selon un mode avantageux de l'invention, la face de sortie de chacun des guides optiques plats de la pluralité de sous-modules d'éclairage présente un profil horizontal en escalier et incliné, d'un côté intérieur vers un côté extérieur du véhicule, vers l'arrière.

Selon un mode avantageux de l'invention, pour chacun des guides optiques plats de la pluralité de sous-modules d'éclairage, la face de réflexion comprend des facettes aptes à réfléchir la lumière de la face d'entrée vers des lentilles sur la face de sortie suivant un axe optique du sous-module d'éclairage correspondant.

Selon un mode avantageux de l'invention, pour chacun des guides optiques plats de la pluralité de sous-modules d'éclairage, la face de réflexion présente un profil tel qu'une distance entre la face de sortie et la face de réflexion, suivant l'axe optique du sous-module d'éclairage correspondant, diminue au fur et à mesure qu'une distance entre ladite face de réflexion et la face d'entrée augmente.

Selon un mode avantageux de l'invention, le module d'éclairage comprend, en outre, des sources lumineuses additionnelles disposés à l'arrière des faces de réflexion des guides optiques plats de la pluralité de sous-modules d'éclairage, configurées pour assurer une fonction d'éclairage de jour.

L'invention peut avoir pour objet un projecteur pour véhicule automobile, comprenant un boîtier formant une cavité, une glace de fermeture de la cavité, sur boîtier, et un module d'éclairage disposé dans la cavité, ledit module d'éclairage étant selon l'invention.

Les mesures de l'invention sont avantageuses en ce qu'elles permettent de réaliser un module d'éclairage assurant au moins deux fonctions réglementaires d'éclairage tout en présentant des aspects allumés dans les différentes fonctions qui sont très similaires, voire identiques. Le module d'éclairage peut aussi être allongé verticalement et présenter des inclinaisons ou galbes dans des plans verticaux et horizontaux, ce qui est avantageux pour l'intégration dans la carrosserie d'un véhicule automobile. Une troisième fonction d'éclairage, à savoir un éclairage de jour, peut aussi être aisément intégrée, tout en conservant un aspect allumé très similaire, voire identique à ceux des autres fonctions d'éclairage.

### Brève description des dessins

[Fig.1] est une vue en perspective de la face avant d'un véhicule équipé d'un dispositif d'éclairage conforme à l'invention ;
[Fig.2] est une vue de face d'un module d'éclairage selon un premier mode de réalisation de l'invention ;
[Fig.3] est une vue en perspective d'un sous-module d'éclairage du module d'éclairage de la [Fig.2] ;
[Fig.4] est une vue en coupe horizontale de la partie avant du sous-module d'éclairage de la [Fig.3] ;
[Fig.5] est une vue de profil du module d'éclairage de la [Fig.2] ;
[Fig.6] est une vue suivant la coupe VI-VI du module d'éclairage de la [Fig.2] ;
[Fig. 7] est une vue de profil d'une variante du module d'éclairage de la [Fig.2] ;
[Fig.8] est une vue de face d'un module d'éclairage selon un deuxième mode de réalisation de l'invention ;
[Fig.9] est une vue du haut d'un sous-module d'éclairage du module d'éclairage de la [Fig. 8], le sous-module étant, en son principe, connu, la combinaison revendiquée de plusieurs sous-modules dans un module d'éclairage constituant l'invention.

### Description détaillée

Dans la description qui suit, le directions et sens exprimés par des termes tels que « avant », « arrière », « longitudinal », « haut », « bas », « intérieur » et « extérieur » sont à comprendre lorsque le module d'éclairage est en position normale de montage sur le véhicule automobile.

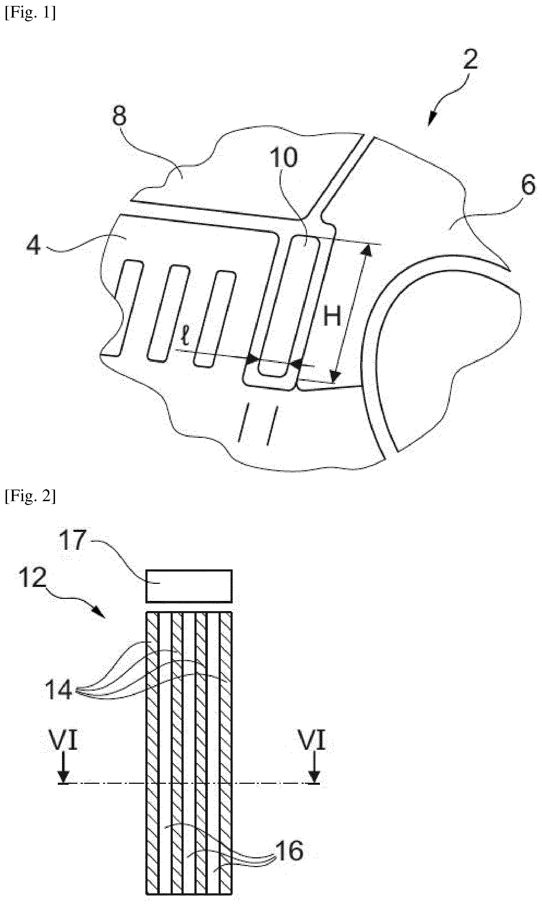

La [Fig.1] est une illustration schématique de la partie avant gauche d'un véhicule automobile équipé d'un projecteur conforme à l'invention.

Le véhicule automobile 2 comprend un pare-chocs avant 4, une aile avant gauche 6 et un capot 8 entre lesquels est disposé un projecteur 10. Il s'agit d'un projecteur gauche, étant entendu que le projecteur droit, également selon l'invention, est symétrique au projecteur gauche 10 par rapport à un plan longitudinal médian vertical. Le projecteur 10 s'étend suivant une direction principale verticale. Il présente ainsi au niveau de sa glace de protection une hauteur *H* et une largeur *l,* la hauteur *H* étant supérieure ou égale à cinq fois la largeur *l*. Il est aussi à noter que la glace de protection du projecteur 10 peut être inclinée vers l'arrière le long de sa hauteur du bas vers le haut. Similairement, elle peut aussi être inclinée vers l'arrière le long de la largeur depuis l'intérieur du véhicule vers l'extérieur du véhicule. Ces inclinaisons peuvent être formées par des profils verticaux et horizontaux inclinées ou coubes. Il est entendu que ces inclinaisons et profils courbes dépendent de la géométrie du véhicule automobile et sont essentiellement des contraintes géométriques que la présente invention permet d'intégrer. Il est ainsi entendu que ces inclinaisons et profils courbes ne sont pas en soi des caractéristiques essentielles.

Les figures 2 à 7 illustrent un module d'éclairage du projecteur 8 de la [Fig.1], selon un premier mode de réalisation de l'invention.

La [Fig.2] est une vue de face du module d'éclairage 12 selon le premier mode de réalisation. Il comprend une juxtaposition de sous-modules d'éclairage 12 et 14 constitués, chacun, essentiellement d'un guide optique en nappe verticale et d'au moins une source lumineuse associée. Les sous-modules d'éclairage comprennent des premier sous-modules d'éclairage 14 aptes à former chacun un sous-faisceau d'éclairage à coupure horizontale supérieure et des deuxièmes sous-modules d'éclairage 16 aptes à former chacun un sous-faisceau d'éclairage sans coupure horizontale supérieure. La juxtaposition des premiers et deuxièmes sous-modules d'éclairage 14 et 16 est en alternance de manière à mélanger les premiers sous-modules d'éclairage 14 avec les deuxièmes sous-modules d'éclairage 16. A la [Fig.2], les premiers sous-modules d'éclairage 14 sont représentés par des surfaces hachurées par opposition aux deuxièmes sous-modules d'éclairage 16. A la [Fig.2], l'alternance est parfaite en ce que chaque sous-module d'éclairage directement adjacent à un autre sous-module d'éclairage est de l'autre type. En d'autres termes, chaque sous-module d'éclairage directement adjacent à un des premiers sous-modules d'éclairage 14 est un des deuxièmes sous-modules d'éclairage 15 et vice versa.

En fonction d'éclairage du type « code », seuls les premiers sous-modules d'éclairage 14 sont actifs, c'est-à-dire sous tension au niveau de leurs sources lumineuses. Ils forment des premiers sous-faisceaux d'éclairage à coupure horizontale supérieure qui, additionnés, forment un premier faisceau d'éclairage réglementaire du type à coupure horizontale supérieure ou « code ». En raison de l'agencement en alternance des premier et deuxième sous-modules d'éclairage 14 et 16, la face de sortie globale du module d'éclairage 12 présente un aspect éclairé, du moins à une distance d'observation minimale, par d'exemple d'un mètre, généralement homogène.

En fonction d'éclairage du type « route », les deuxièmes sous-modules d'éclairage 16 sont actifs, c'est-à-dire sous tension au niveau de leurs sources lumineuses, avantageusement en complément des premiers sous-modules d'éclairage 14. Dans ce cas, la face de sortie globale du module d'éclairage 12 est totalement éclairée, procurant ainsi un aspect éclairé proche voire identique à celui de la fonction d'éclairage du type « code ». Il est toutefois à noter qu'il est également envisageable que dans la fonction d'éclairage du type « route », seuls les deuxièmes sous-modules d'éclairage 16 soient actifs, auquel cas l'aspect éclairé de la face de sortie globale du module d'éclairage 12 est quasi identique à celui de la fonction d'éclairage du type « route ».

La similitude des aspects éclairés qui vient d'être exposée ci-avant est le résultat de la juxtaposition en alternance des premiers et deuxièmes sous-modules d'éclairage 14 et 16, combinée à la minceur ou largeur réduite des premiers et deuxièmes sous-modules d'éclairage 14 et 16. En fonction des largeurs des premiers et deuxièmes sous-modules d'éclairage 14 et 16, de leur nombre et de la distance d'observation minimale, l'alternance peut dévier d'une alternance stricte comme celle illustrée à la [Fig.2]. Il est en effet envisageable de grouper plusieurs des premiers sous-modules d'éclairage 14 tout en prévoyant un ou plusieurs des deuxièmes sous-modules d'éclairage 16 entre ces groupes, et vice versa.

Le module d'éclairage 12 peut comprendre un troisième sous-module d'éclairage 17, produisant un sous-faisceau d'éclairage avec une coupure horizontale supérieure en ressaut (couramment désignée par le terme anglais « kink »), en complément aux premiers sous-modules d'éclairage 14 produisant les sous-faisceaux d'éclairage à coupure horizontale supérieure droite. Ce sous-faisceau d'éclairage avec une coupure horizontale supérieure en ressaut peut être peu étendu horizontalement en comparaison avec la combinaison des sous-faisceaux d'éclairage à coupure horizontale supérieure droite. Ce troisième sous-module d'éclairage 17 peut être réalisé de différentes manières, en soi bien connues de l'homme de métier.

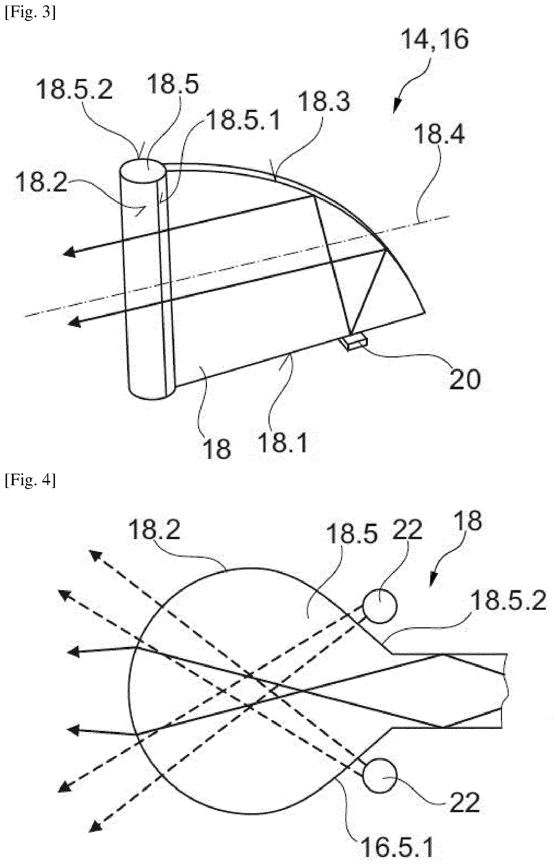

La [Fig.3] illustre en perspective un des premiers et deuxièmes sous-modules d'éclairage 14 et 16. Il comprend essentiellement un guide optique en nappe 18 et au moins une source lumineuse 20. Le guide optique en nappe 18 comprend une face d'entrée 18.1, une face de sortie 18.2 et une face de réflexion 18.3. L'au moins une source lumineuse 20 est disposée en vis-à-vis de la face d'entrée 18.1. La face de réflexion 18.3 présente un profil vertical courbe, avantageusement parabolique, dimensionné pour réfléchir, avantageusement par réflexion totale, la lumière se propageant dans le corps du guide optique en nappe, depuis la face d'entrée 18.1, vers la face de sortie 18.2, et ce suivant un axe optique 18.4 du sous-module d'éclairage 14 ou 16. Dans le cas d'un des premiers sous-modules d'éclairage 14, le profil vertical de la face de réflexion 18.3 est avantageusement parabolique avec un foyer situé au bord arrière de l'au moins une source lumineuse 20 de manière à réfléchir tous les rayons lumineux suivant l'axe optique 18.4 ou une direction descendante par rapport à cet axe.

Toujours à la [Fig.3], on peut observer que la face de sortie 18.2 présente un profil horizontal courbe, par exemple circulaire ou elliptique, et est raccordé au corps du guide optique en nappe par une portion de raccordement 18.5 du guide optique en nappe présentant deux faces latérales 18.5.1 et 18.5.2 divergentes. Cette portion de raccordement 18.5 forme avec la face de sortie 18.2 une lentille de projection.

Il est à noter que le principe de construction et de fonctionnement des premiers et deuxièmes sous-modules d'éclairage décrits ci-avant en relation avec les figures 2 et 3 est connu en soi du document de brevet publié EP 2 045 515 A1.

La [Fig.4] est une vue coupe horizontale de la partie avant du guide optique en nappe 18 de la [Fig.3]. On peut observer deux tracés de rayons, en trait continu, provenant de l'au moins une source lumineuse 20 en vis-à-vis de la face d'entrée 18.1 ([Fig.3]). Ces rayons peuvent s'étaler horizontalement dans la portion de raccordement 18.5 et être réfractés au passage du dioptre formé par la face de sortie 18.2.

Des sources lumineuses additionnelles 22 peuvent être disposées en vis-à-vis d'au moins une des deux faces latérales 18.5.1 et 18.5.2 de la portion de raccordement 18.5. Ces sources lumineuses additionnelles sont en l'occurrence des guides optiques de section circulaire, alimentés en lumière à une extrémité et configurés pour distribuer la lumière le long dudit guide optique, celle-ci sortant transversalement vers la ou les faces latérales 18.5.1 et 18.5.2. Il est entendu que d'autres systèmes optiques, notamment bien connus en soi, sont envisageables. Ces sources lumineuses additionnelles 22 permettent de réaliser une troisième fonction d'éclairage, à savoir une fonction d'éclairage de jour ou encore « DRL » (« Daytime Running Light »). On peut observer quatre tracés de rayons, en trait interrompu, provenant des sources lumineuses additionnelles 22. Ces rayons sont relativement étalés horizontalement dans la portion de raccordement 18.5 et sortent de la face de sortie 18.2 de manière étalée, ce qui est particulièrement adéquat pour cette fonction d'éclairage.

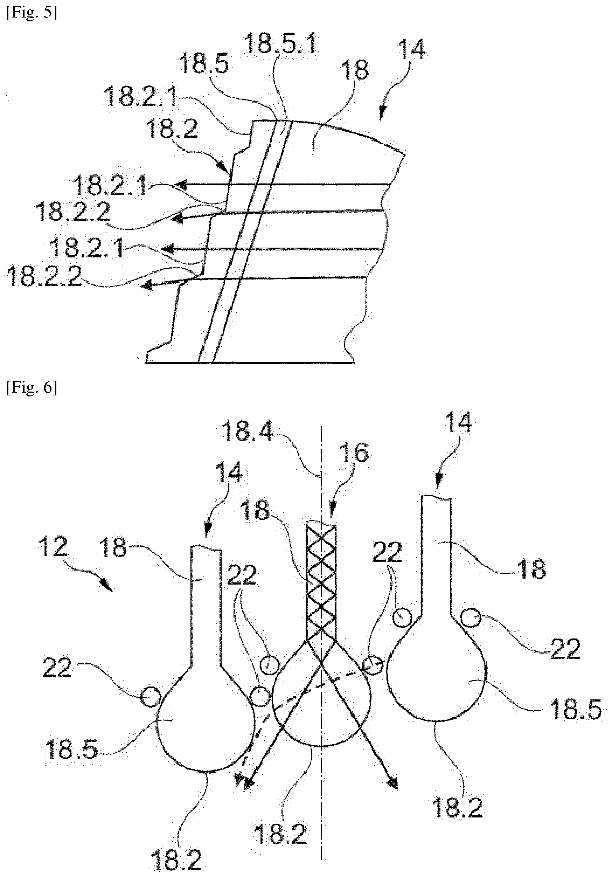

La [Fig.5] est une vue de profil du module d'éclairage de la [Fig.2]. On peut y observer un des premiers sous-modules d'éclairage 14, étant entendu que cette illustration s'applique également aux deuxièmes sous-modules d'éclairage 16. La face de sortie 18.2 du guide optique en nappe 18 peut présenter un profil vertical en escalier afin que le module d'éclairage puisse présenter une inclinaison vers l'arrière du bas vers le haut de la face de sortie globale. Comme mentionné précédemment, les premier sous-modules d'éclairage 14 sont configurés pour produire des sous-faisceaux d'éclairage à coupure horizontale supérieure. Les tronçons de raccordement 18.2.2 entre les tronçons verticaux 18.2.1 de la face de sortie 18.2 peuvent présenter une inclinaison vers le bas, de l'arrière vers l'avant, de manière à ce que les rayons les rencontrant soient déviés vers le bas. Cela signifie que ces tronçons de raccordement 18.2.2 ne perturbent pas la coupure horizontale supérieure. La [Fig.5], étant une vue de profil, ne montre que l'extrémité avant de la face de sortie 18.2 ; il est toutefois entendu que les tronçons verticaux 18.2.1 présentent des contours horizontaux courbes s'étendant verticalement et les tronçons de raccordement 18.2.2 présentent des contours horizontaux courbes présentant une inclinaison qui varie le long dudit contour, cette inclinaison étant avantageusement maximale à l'extrémité avant telle qu'illustrée à la [Fig.5].

La [Fig.6] est une vue en coupe VI-VI du module d'éclairage 12 de la [Fig.2]. Seuls trois sous-modules d'éclairage, à savoir deux premiers sous-modules d'éclairage 14 et un deuxième sous-module d'éclairage 16 sont représentés. On observe que les premiers et deuxième sous-modules d'éclairage 14 et 16 sont progressivement décalés vers l'arrière depuis l'intérieur vers l'extérieur du véhicule, c'est-à-dire de la gauche vers la droite à la [Fig.6], pour un projecteur gauche du véhicule automobile. Ce décalage permet au module d'éclairage 12 de présenter une face de sortie globale avec un profil incliné, comme évoqué plus haut en relation avec la [Fig.1], notamment afin de se conformer à la carrosserie du véhicule automobile. Un tel agencement peut limiter la face de sortie d'un côté et l'augmenter de l'autre côté. En effet, si on considère le deuxième sous-module d'éclairage 16 situé entre les deux premiers sous-modules d'éclairage 14, la partie gauche (suivant l'orientation à la [Fig.6]) de la face de sortie 18.2 est partiellement occultée par la face de sortie 18.2 du premier sous-module d'éclairage 14 situé à sa gauche et décalé vers l'avant. Similairement, la partie droite (suivant l'orientation à la [Fig.6]) de la face de sortie 18.2 est libre d'obstacle pour les rayons lumineux du sous-faisceau d'éclairage qui en sortent en raison du retrait vers l'arrière de la face de sortie 18.2 du premier sous-module d'éclairage 14 situé à sa droite. Cette situation est illustrée par les deux tracés de rayon en trait continu, le rayon sortant de la partie gauche de la face de sortie 18.2 passant devant la face de sortie 18.2 du premier sous-module d'éclairage 14 à gauche et représentant la limitation vers la gauche de la face de sortie pour le sous-faisceau d'éclairage correspondant. Le rayon sortant de la partie droite de la face de sortie 18.2 montre que cette partie droite n'est pas ou peu limitée par la présence du premier sous-module d'éclairage 14 à sa droite. En d'autres termes, la limitation de la zone active de la face de sortie d'un côté est compensée par une augmentation du côté opposé lorsque les premiers et deuxième sous-modules d'éclairage sont décalés longitudinalement.

Toujours à la [Fig.6] on peut observer que la lumière émise par les sources lumineuses additionnelles 22, pour la fonction d'éclairage de jour, est transmise dans la portion de raccordement 18.5 du guide optique en nappe 18 avec des angles davantage inclinés par rapport à l'axe optique 18.4 et peuvent ainsi exploiter une plus grande zone de la face sortie 18.2 du côté où le premier sous-module d'éclairage voisin est décalé vers l'avant. Un tracé de rayon, en trait interrompu, illustre ce phénomène.

Il peut être avantageux d'écarter transversalement les sous-modules d'éclairage 14 et 16 pour limiter les occultations mutuelles décrites ci-avant et/ou rendre les faces de sortie 18.2 et les portions de raccordement 18.5 dissymétriques par rapport à la nappe du guide optique de manière à diriger la lumière davantage du côté non-occulté.

Il est entendu que ce qui vient d'être décrit en relation avec un des deuxièmes sous-modules d'éclairage 16 s'applique également aux premiers sous-modules d'éclairage 14 dès lors qu'ils sont adjacents à des deuxièmes sous-modules d'éclairage 16 décalés longitudinalement, de manière similaire à la [Fig.6].

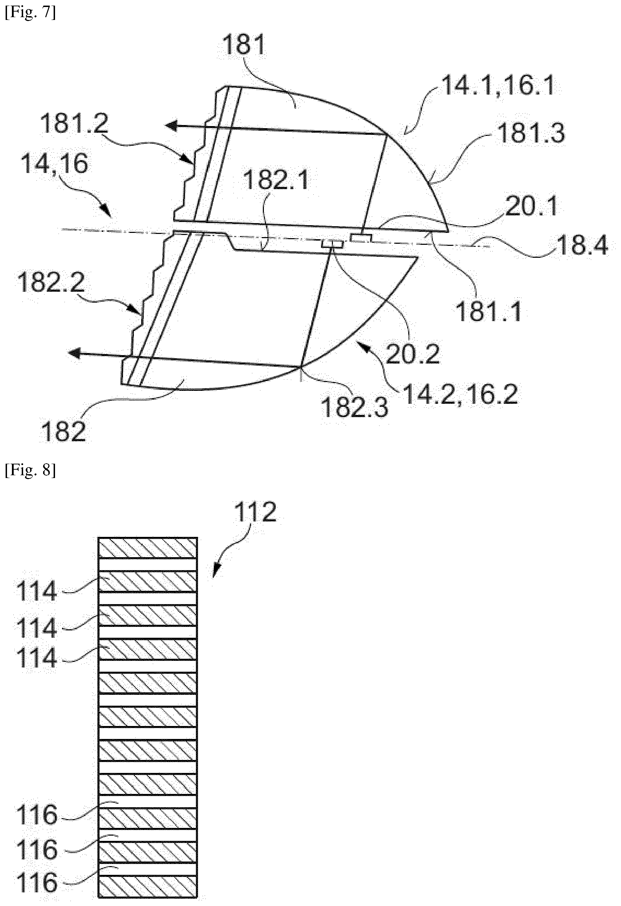

La [Fig.7] est une vue de profil d'une variante des premiers et/ou deuxièmes sous-modules d'éclairage 14 et 16. Un, plusieurs ou chacun des premiers et/ou deuxièmes sous-modules d'éclairage 14 et 16 peut comprendre deux sous-modules d'éclairage 14.1 et 14.2 ou 16.1 et 16.2 disposés de manière opposée par rapport à un plan horizontal, comme illustré à la [Fig.7]. Les guides optiques en nappe 181 et 182 des deux sous-modules d'éclairage 14.1 et 14.2 ou 16.1 et 16.2 ont leurs faces d'entrées 181.1 et 182.1 en vis-à-vis. Les sources lumineuses 20.1 et 20.2 respectives sont également opposées et avantageusement disposées sur une même platine. Ces sources lumineuses 20.1 et 20.2 sont avantageusement décalées longitudinalement, c'est-à-dire suivant l'axe optique 18.4. Ce décalage permet d'éviter une surchauffe des sources lumineuses et de leurs alentours. Il permet de tenir du compte du fait que pour le sous-module d'éclairage du haut 14.1, c'est avantageusement le bord arrière de la source lumineuse 20.1 qui située au foyer du profil parabolique de la face de réflexion 181.3, alors que pour le sous-module d'éclairage du bas 14.2, c'est avantageusement le bord avant de la source lumineuse 20.2 qui est situé au foyer du profil parabolique de la face de réflexion 182.3. La source lumineuse 20.2 pourrait alors être située à l'arrière de la source lumineuse 20.1. Le décalage permet également de compenser le décalage longitudinal moyen entre les deux guides optiques en nappe 181 et 182 dû au profil incliné, en l'occurrence vers l'arrière du bas vers le haut, de la face de sortie totale du premier ou deuxième sous-module d'éclairage 14 et 16. Les faces de sortie 181.2 et 182.2 sont alignées longitudinalement là où elles sont adjacentes, en l'occurrence au niveau de l'axe optique 18.4. Une telle configuration permet d'augmenter l'étendue verticale du premier ou deuxième sous-module d'éclairage 14 et 16 et d'en augmenter la puissance d'éclairage.

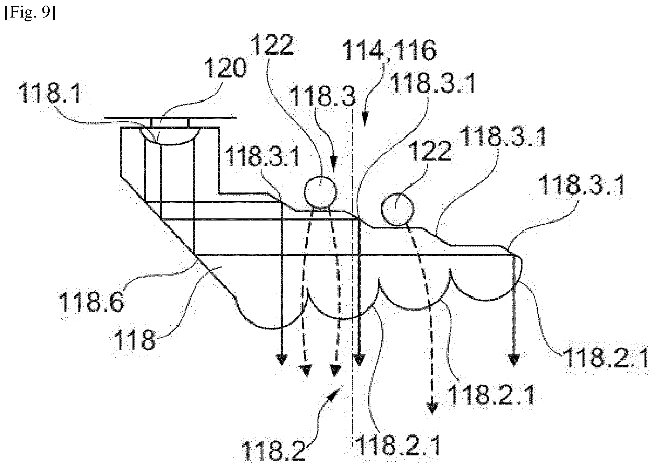

Les figures 8 et 9 illustrent un module d'éclairage du projecteur 8 de la [Fig.1], selon un deuxième mode de réalisation de l'invention. Les numéros de référence du premier mode de réalisation sont utilisés pour désigner les éléments identiques ou correspondants, ces numéros étant toutefois majorés de 100. Il est par ailleurs fait référence à la description de ces éléments dans le cadre du premier mode de réalisation. Des numéros spécifiques compris entre 100 et 200 sont utilisés pour désigner les éléments spécifiques.

En référence à la [Fig.8] et contrairement à la [Fig.2] du premier mode de réalisation, les premiers et deuxièmes sous-modules d'éclairage 114 et 116 sont disposés horizontalement et juxtaposés verticalement. Similairement au premier mode de réalisation, les premier sous-modules d'éclairage 114 sont aptes à former chacun un sous-faisceau d'éclairage à coupure horizontale supérieure et les deuxièmes sous-modules d'éclairage 116 sont aptes à former chacun un sous-faisceau d'éclairage sans coupure horizontale supérieure. La juxtaposition des premiers et deuxièmes sous-modules d'éclairage 114 et 116 est en alternance, similairement au premier mode de réalisation, de manière à mélanger les premiers sous-modules d'éclairage 114 avec les deuxièmes sous-modules d'éclairage 116.

La [Fig.9] est une vue du dessus d'un des premiers ou deuxièmes sous-modules d'éclairage 114 et 116. Il comprend un guide optique plat 118 avec une face d'entrée 118.1 pour la lumière émise par l'au moins une source lumineuse 120, une face de sortie 118.2 et une face de réflexion 118.3. La face de sortie 118.2 comprend des reliefs formant des lentilles de projection 118.2.1 et la face de réflexion 118.3 comprend des facettes de réflexion 118.3.1 configurées pour renvoyer, par réflexion, de la lumière vers les reliefs de la face de sortie 118.2 formant des lentilles de projection 118.2.1. Les facettes de réflexion 118.3.1 sont agencées en escalier de manière à réfléchir différentes portions de la lumière transmise dans le guide optique plat 118. Dans le cas présent, la face d'entrée 118.1 est généralement parallèle aux faces de sortie 118.2 et de réflexion 118.3, de sorte qu'une face de réflexion intermédiaire 118.6 est prévue entre la face d'entrée 118.1 et la partie principale du guide optique plat 118 délimitée par les faces de sortie 118.2 et de réflexion 118.3. Il est toutefois envisageable de prévoir une face d'entrée 118.1 transversale, voire perpendiculaire, à la direction principale du guide optique plat 118 délimitée par les faces de sortie 118.2 et de réflexion 118.3, auquel cas la face de réflexion intermédiaire 118.6 n'est pas nécessaire.

Similairement au premier de réalisation, des sources lumineuses additionnelles 122 peuvent être disposées à l'arrière des guides optiques plats 118, en l'occurrence en vis-à-vis de la face de réflexion 118.3, de manière à pouvoir assurer une troisième fonction d'éclairage, à savoir une fonction d'éclairage de jour.

Les premiers et deuxièmes sous-modules d'éclairage 114 et 116 peuvent être décalés vers l'arrière, du bas vers le haut, de manière à présenter une face de sortie globale avec un profil incliné, voire courbé, dans un plan vertical afin de se conformer à la carrosserie du véhicule automobile.

Comme cela est visible à la [Fig.9], les reliefs de la face de sortie 118.2 formant les lentilles de projection 118.2.1 peuvent être progressivement décalés vers l'arrière, de l'intérieur vers l'extérieur du véhicule automobile, en l'occurrence de la gauche vers la droite suivant la [Fig.9], de manière à présenter une face de sortie globale avec un profil incliné, voire courbé, dans un plan horizontal afin de se conformer à la carrosserie du véhicule automobile.

La coupure horizontale supérieure des sous-faisceaux des premiers sous-modules d'éclairage 114 peut présenter un ressaut (couramment désigné par le terme anglais « kink »), en adaptant les facettes de réflexion 118.3.1 et les lentilles de projections correspondantes 118.2.1. La présence d'un troisième sous-module de projection assurant une coupure avec ressaut, comme le troisième sous-module d'éclairage 17 ( [Fig.2]) du premier mode de réalisation n'est pas nécessaire. Il peut toutefois être prévu, de manière similaire.

Il est à noter que le principe de construction et de fonctionnement des premiers et deuxièmes sous-modules d'éclairage décrits ci-avant en relation avec les figures 8 et 9 est connu en soi du document de brevet publié EP 2 679 884 A1.

## Revendications

1. Module d'éclairage (12 ; 112) pour véhicule automobile (2), comprenant une pluralité de sous-modules d'éclairage (14, 16 ; 112, 116) comprenant, chacun :
- au moins une source lumineuse (20 ; 120) ;
- un guide optique plat (18 ; 118) avec une face d'entrée (18.1 ; 118.1) en vis-à-vis de l'au moins une source lumineuse (20 ; 120), une face de sortie (18.2 ; 118.2) et, à l'arrière de la face de sortie (18.2 ; 118.2), une face de réflexion (18.3 ; 118.3) apte à réfléchir de la lumière de la face d'entrée (18.1 ; 118.1) vers la face de sortie (18.2 ; 118.2) ;
**caractérisé en ce que**
la pluralité de sous-modules d'éclairage (14, 16 ; 114, 116) comprend des premiers sous-modules d'éclairage (14 ; 114) configurés pour produire, chacun, un sous-faisceau d'éclairage avec une coupure horizontale supérieure, et des deuxièmes sous-modules d'éclairage (16 ; 116) configurés pour produire, chacun, un sous-faisceau d'éclairage sans coupure horizontale supérieure ; et
les premiers et deuxième sous-modules d'éclairage (14, 16 ; 114, 116) sont juxtaposés de manière à former, le long de la juxtaposition, plusieurs alternances entre les premiers et deuxième sous-modules d'éclairage (14, 16 ; 114, 116).

2. Module d'éclairage (12 ; 112) selon la revendication 1, dans lequel les guides optiques plats (18 ; 118) de la pluralité de sous-modules d'éclairage (14, 16 ; 114, 116) s'étendent suivant une direction principale horizontale ou verticale, lorsque le module d'éclairage est en position de montage et observé de face.

3. Module d'éclairage (12 ; 112) selon l'une des revendications 1 et 2, dans lequel les faces de sortie (18.2 ; 118.2) des guides optiques plats (18 ; 118) de la pluralité de sous-modules d'éclairage (14, 16 ; 114, 116) sont adjacentes et forment une face de sortie globale du module d'éclairage présentant une hauteur H et une largeur 1, ladite hauteur H étant supérieure ou égale à 5 fois ladite largeur 1.

4. Module d'éclairage (12 ; 112) selon l'une des revendications 1 à 3, dans lequel les plusieurs alternances entre les premiers et deuxièmes sous-modules d'éclairage (14, 16 ; 114, 116) sont à un nombre correspondant au nombre des premiers sous-modules d'éclairage (14 ; 114) ou au nombre des deuxièmes sous-modules d'éclairage (16 ; 116).

5. Module d'éclairage (12) selon l'une des revendications 1 à 4, dans lequel les guides optiques plats (18) de la pluralité de sous-modules d'éclairage (14, 16) forment des nappes s'étendant suivant une direction principale verticale, lorsque le module d'éclairage est en position de montage et observé de face, et sont décalés longitudinalement les uns par rapport aux autres de manière à ce que les faces de sortie (18.2) desdits guides optiques plats (18) présentent un profil horizontal incliné et/ou courbé, et préférentiellement dans lequel la face de sortie (18.2) de chacun des guides optiques plats (18) de la pluralité de sous-modules d'éclairage (14, 16) présente un profil vertical en escalier et incliné, de haut en bas, vers l'arrière.

6. Module d'éclairage (12) selon la revendication 5, dans lequel, pour chacun des guides optiques plats (18) de la pluralité de sous-modules d'éclairage (14, 16), la face d'entrée (18.1) est transversale à la face de sortie (18.2) et la face réflexion (18.3) présente un profil vertical courbe apte à réfléchir la lumière de la face d'entrée (18.1) vers la face de sortie (18.2) suivant un axe optique (18.4) du sous-module d'éclairage (14, 16).

7. Module d'éclairage (12) selon l'une des revendications 5 et 6, dans lequel chacun des guides optiques plats (18) de la pluralité de sous-modules d'éclairage (14, 16) comprend une portion de raccordement (18.5) avec deux faces latérales divergentes (18.5.1, 18.5.2), raccordant la nappe à la face de sortie (18.2), ladite face de sortie (18.2) présentant un profil transversal courbe formant une lentille.

8. Module d'éclairage (12) selon la revendication 7, comprenant, en outre, des sources lumineuses additionnelles (22) disposés à l'arrière des deux faces divergentes (18.5.1, 18.5.2) des guides optiques plats (18) de la pluralité de sous-modules d'éclairage (14, 16), configurées pour assurer une fonction d'éclairage de jour.

9. Module d'éclairage (112) selon l'une des revendications 1 à 4, dans lequel les guides optiques plats (118) de la pluralité de sous-modules d'éclairage (114, 116) s'étendent suivant une direction principale horizontale, lorsque le module d'éclairage est en position de montage et observé de face, et sont décalés longitudinalement les uns par rapport aux autres de manière à ce que les faces de sortie (118.2) desdits guides optiques plats (118) présentent un profil vertical incliné ou courbe.

10. Module d'éclairage (112) selon la revendication 9, dans lequel, pour chacun des guides optiques plats (118) de la pluralité de sous-modules d'éclairage (114, 116), la face réflexion (118.3) comprend des facettes (118.3.1) aptes à réfléchir la lumière de la face d'entrée (118.1) vers des lentilles (118.2.1) sur la face de sortie (118.2) suivant un axe optique (118.4) du sous-module d'éclairage (114, 116), et préférentiellement dans lequel, pour chacun des guides optiques plats (118) de la pluralité de sous-modules d'éclairage (114, 116), la face de réflexion (118.3) présente un profil tel qu'une distance entre la face de sortie (118.2) et la face de réflexion (118.3), suivant l'axe optique (118.4) du sous-module d'éclairage (114, 116), diminue au fur et à mesure qu'une distance entre ladite face de réflexion (118.3) et la face d'entrée (118.1) augmente.

11. Module d'éclairage (112) selon la revendication 10, comprenant, en outre, des sources lumineuses additionnelles (22) disposés à l'arrière des faces de réflexion (118.3) des guides optiques plats (118) de la pluralité de sous-modules d'éclairage (114, 116), configurées pour assurer une fonction d'éclairage de jour.

## Patentansprüche

1. Beleuchtungsmodul (12; 112) für ein Kraftfahrzeug (2), das eine Vielzahl von Beleuchtungsuntermodulen (14, 16; 112, 116) umfasst, die jeweils umfassen:
- mindestens eine Lichtquelle (20; 120);
- einen flachen Lichtleiter (18; 118) mit einer der mindestens einen Lichtquelle (20; 120) gegenüberliegenden Eintrittsfläche (18.1; 118.1), eine Austrittsfläche (18.2; 118.2) und, auf der Rückseite der Austrittsfläche (18.2; 118.2), eine Reflexionsfläche (18.3; 118.3), die in der Lage ist, Licht von der Eintrittsfläche (18.1; 118.1) zu der Austrittsfläche (18.2; 118.2) zu reflektieren;
**dadurch gekennzeichnet, dass**
die Vielzahl von Beleuchtungsuntermodulen (14, 16; 114, 116) erste Beleuchtungsuntermodule (14; 114) umfasst, die so konfiguriert sind, dass sie jeweils einen Beleuchtungsunterstrahl mit einer oberen horizontalen Hell-Dunkel-Grenze erzeugen, und zweite Beleuchtungsuntermodule (16; 116), die so konfiguriert sind, dass sie jeweils einen Beleuchtungsunterstrahl ohne obere horizontale Hell-Dunkel-Grenze erzeugen; und
die ersten und zweiten Beleuchtungsuntermodule (14, 16; 114, 116) so nebeneinander angeordnet sind, dass sie entlang der Nebeneinanderanordnung mehrere Wechsel zwischen den ersten und zweiten Beleuchtungsuntermodulen (14, 16; 114, 116) bilden.

2. Beleuchtungsmodul (12; 112) nach Anspruch 1, wobei sich die flachen Lichtleiter (18; 118) der Vielzahl von Beleuchtungsuntermodulen (14, 16; 114, 116) entlang einer horizontalen oder vertikalen Hauptrichtung erstrecken, wenn sich das Beleuchtungsmodul in der Einbauposition befindet und von vorne betrachtet wird.

3. Beleuchtungsmodul (12; 112) nach einem der Ansprüche 1 und 2, wobei die Austrittsflächen (18.2; 118.2) der flachen Lichtleiter (18; 118) der Vielzahl von Beleuchtungsuntermodulen (14, 16; 114, 116) aneinander angrenzen und eine Gesamtaustrittsfläche des Beleuchtungsmoduls mit einer Höhe H und einer Breite l aufweisen, wobei die Höhe H größer oder gleich dem Fünffachen der Breite l ist.

4. Beleuchtungsmodul (12; 112) nach einem der Ansprüche 1 bis 3, wobei die mehreren Wechsel zwischen den ersten und zweiten Beleuchtungsuntermodulen (14, 16; 114, 116) bei einer Anzahl liegen, die der Anzahl der ersten Beleuchtungsuntermodule (14; 114) oder der Anzahl der zweiten Beleuchtungsuntermodule (16; 116) entspricht.

5. Beleuchtungsmodul (12) nach einem der Ansprüche 1 bis 4, wobei die flachen Lichtleiter (18) der Vielzahl von Beleuchtungsuntermodulen (14, 16) Auflagen bilden, die sich entlang einer vertikalen Hauptrichtung erstrecken, wenn sich das Beleuchtungsmodul in der Einbauposition befindet und von vorne betrachtet wird, und in Längsrichtung zueinander versetzt sind, so dass die Austrittsflächen (18.2) der flachen Lichtleiter (18) ein geneigtes und/oder gekrümmtes horizontales Profil aufweisen, und vorzugsweise wobei die Austrittsfläche (18.2) jedes der flachen Lichtleiter (18) der Vielzahl von Beleuchtungsuntermodulen (14, 16) ein vertikales Treppenprofil aufweist, das von oben nach unten nach hinten geneigt ist.

6. Beleuchtungsmodul (12) nach Anspruch 5, wobei bei jedem der flachen Lichtleiter (18) der Vielzahl von Beleuchtungsuntermodulen (14, 16) die Eintrittsfläche (18.1) quer zu der Austrittsfläche (18.2) verläuft und die Reflexionsfläche (18.3) ein vertikal gekrümmtes Profil aufweist, das geeignet ist, Licht von der Eintrittsfläche (18.1) entlang einer optischen Achse (18.4) des Beleuchtungsuntermoduls (14, 16) zu der Austrittsfläche (18.2) zu reflektieren.

7. Beleuchtungsmodul (12) nach einem der Ansprüche 5 und 6, wobei jeder der flachen Lichtleiter (18) der Vielzahl von Beleuchtungsuntermodulen (14, 16) einen Verbindungsabschnitt (18.5) mit zwei divergierenden Seitenflächen (18.5.1, 18.5.2) umfasst, der die Auflage mit der Austrittsfläche (18.2) verbindet, wobei die Austrittsfläche (18.2) ein gekrümmtes Querprofil aufweist, das eine Linse bildet.

8. Beleuchtungsmodul (12) nach Anspruch 7, ferner umfassend zusätzliche Lichtquellen (22), die hinter den beiden divergierenden Flächen (18.5.1, 18.5.2) der flachen Lichtleiter (18) der Vielzahl von Beleuchtungsuntermodulen (14, 16) angeordnet und so konfiguriert sind, dass sie eine Tageslichtfunktion bereitstellen.

9. Beleuchtungsmodul (112) nach einem der Ansprüche 1 bis 4, wobei sich die flachen Lichtleiter (118) der Vielzahl von Beleuchtungsuntermodulen (114, 116) entlang einer horizontalen Hauptrichtung erstrecken, wenn sich das Beleuchtungsmodul in der Einbauposition befindet und von vorne betrachtet wird, und in Längsrichtung zueinander versetzt sind, so dass die Austrittsflächen (118.2) der flachen Lichtleiter (118) ein geneigtes oder gekrümmtes vertikales Profil aufweisen.

10. Beleuchtungsmodul (112) nach Anspruch 9, wobei für jeden der flachen Lichtleiter (118) der Vielzahl von Beleuchtungsuntermodulen (114, 116) die Reflexionsfläche (118.3) Teilflächen (118.3.1) umfasst, die geeignet sind, Licht von der Eintrittsfläche (118.1) zu Linsen (118.2.1) auf der Austrittsfläche (118.2) entlang einer optischen Achse (118.4) des Beleuchtungsuntermoduls (114, 116) zu reflektieren, und vorzugsweise wobei für jeden der flachen Lichtleiter (118) der Vielzahl von Beleuchtungsuntermodulen (114, 116) die Reflexionsfläche (118.3) ein solches Profil aufweist, dass ein Abstand zwischen der Austrittsfläche (118.2) und der Reflexionsfläche (118.3) entlang der optischen Achse (118.4) des Beleuchtungsuntermoduls (114, 116) abnimmt, wenn ein Abstand zwischen der Reflexionsfläche (118.3) und der Eintrittsfläche (118.1) zunimmt.

11. Beleuchtungsmodul (112) nach Anspruch 10, ferner umfassend zusätzliche Lichtquellen (22), die hinter den Reflexionsflächen (118.3) der flachen Lichtleiter (118) der Vielzahl von Beleuchtungsuntermodulen (114, 116) angeordnet und so konfiguriert sind, dass sie eine Tageslichtfunktion bereitstellen.

## Claims

1. Lighting module (12; 112) for a motor vehicle (2), comprising a plurality of lighting sub-modules (14, 16; 112, 116) each comprising:
- at least one light source (20; 120);
- a flat optical guide (18; 118) with an entry face (18.1; 118.1) facing the at least one light source (20; 120), an exit face (18.2; 118.2) and, at the rear of the exit face (18.2; 118.2), a reflection face (18.3; 118.3) capable of reflecting light from the entry face (18.1; 118.1) toward the exit face (18.2; 118.2);
**characterized in that**
the plurality of lighting sub-modules (14, 16; 114, 116) comprises first lighting sub-modules (14; 114) configured to each produce a lighting sub-beam with horizontal upper cutoff and second lighting sub-modules (16; 116) configured to each produce a lighting sub-beam without horizontal upper cutoff; and
the first and second lighting sub-modules (14, 16; 114, 116) are juxtaposed in such a way as to form, along the juxtaposition, several alternations between the first and second lighting sub-modules (14, 16; 114, 116).

2. Lighting module (12; 112) according to Claim 1, wherein the flat optical guides (18; 118) of the plurality of lighting sub-modules (14, 16; 114, 116) extend in a horizontal or vertical main direction, when the lighting module is in the assembly position and seen from the front.

3. Lighting module (12; 112) according to either of Claims 1 and 2, wherein the exit faces (18.2; 118.2) of the flat optical guides (18; 118) of the plurality of lighting sub-modules (14, 16; 114, 116) are adjacent and form an overall exit face of the lighting module having a height H and a width l, said height H being greater than or equal to 5 times said width l.

4. Lighting module (12; 112) according to one of Claims 1 to 3, wherein the several alternations between the first and second lighting sub-modules (14, 16; 114, 116) are in a number corresponding to the number of first lighting sub-modules (14; 114) or to the number of second lighting sub-modules (16; 116).

5. Lighting module (12) according to one of Claims 1 to 4, wherein the flat optical guides (18) of the plurality of lighting sub-modules (14, 16) form sheets extending in a vertical main direction, when the lighting module is in the assembly position and seen from the front, and are offset longitudinally relative to one another such that the exit faces (18.2) of said flat optical guides (18) have an inclined and/or curved horizontal profile, and preferably wherein the exit face (18.2) of each of the flat optical guides (18) of the plurality of lighting sub-modules (14, 16) has a vertical profile that is stepped and inclined, from top to bottom, rearward.

6. Lighting module (12) according to Claim 5, wherein, for each of the flat optical guides (18) of the plurality of lighting sub-modules (14, 16), the entry face (18.1) is transverse to the exit face (18.2) and the reflection face (18.3) has a curved vertical profile capable of reflecting the light from the entry face (18.1) toward the exit face (18.2) along an optical axis (18.4) of the lighting sub-module (14, 16).

7. Lighting module (12) according to either of Claims 5 and 6, wherein each of the flat optical guides (18) of the plurality of lighting sub-modules (14, 16) comprises a connection portion (18.5) with two divergent lateral faces (18.5.1, 18.5.2), connecting the sheet to the exit face (18.2), said exit face (18.2) having a curved transverse profile forming a lens.

8. Lighting module (12) according to Claim 7, further comprising additional light sources (22) arranged at the rear of the two divergent faces (18.5.1, 18.5.2) of the flat optical guides (18) of the plurality of lighting sub-modules (14, 16), configured to operate in a daytime lighting mode.

9. Lighting module (112) according to one of Claims 1 to 4, wherein the flat optical guides (118) of the plurality of lighting sub-modules (114, 116) extend in a horizontal main direction, when the lighting module is in the assembly position and seen from the front, and are offset longitudinally relative to one another such that the exit faces (118.2) of said flat optical guides (118) have an inclined or curved vertical profile.

10. Lighting module (112) according to Claim 9, wherein, for each of the flat optical guides (118) of the plurality of lighting sub-modules (114, 116), the reflection face (118.3) comprises facets (118.3.1) capable of reflecting the light from the entry face (118.1) toward lenses (118.2.1) on the exit face (118.2) along an optical axis (118.4) of the lighting sub-module (114, 116), and preferably wherein, for each of the flat optical guides (118) of the plurality of lighting sub-modules (114, 116), the reflection face (118.3) has a profile such that a distance between the exit face (118.2) and the reflection face (118.3), along the optical axis (118.4) of the lighting sub-module (114, 116), decreases as a distance between said reflection face (118.3) and the entry face (118.1) increases.

11. Lighting module (112) according to Claim 10, further comprising additional light sources (22) arranged at the rear of the reflection faces (118.3) of the flat optical guides (118) of the plurality of lighting sub-modules (114, 116), configured to operate in a daytime lighting mode.
